# FASCICULE DE BREVET EUROPEEN

(11) **EP 0 793 327 B1**
(45) Date de publication et mention de la délivrance du brevet: **28.04.1999**
(21) Numéro de dépôt: 97400383.2
(22) Date de dépôt: 20.02.1997
(51) Int. Cl.: H02J 7/10, H02J 7/00

(54) **Dispositif de commande de la charge d'au moins une batterie**
Vorrichtung zur Steuerung der Ladung mindestens einer Batterie
Device for controlling the charge of at least one battery

(30) Priorité: 27.02.1996 FR 9602412
(43) Date de publication de la demande: 03.09.1997
(73) Titulaire: STMicroelectronics S.A., 94250 Gentilly (FR)
(72) Inventeur: Le Van Suu, Maurice, 75116 Paris (FR)
(74) Mandataire: Schmit, Christian Norbert Marie

(56) Documents cités:
- WO-A-94/18738
- DE-C- 4 200 693
- US-A- 5 202 617
- WESCON '95 CONFERENCE RECORD. MICROELECTRONICS, COMMUNICATIONS TECHNOLOGY, PRODUCING QUALITY PRODUCTS, MOBILE AND PORTABLE POWER, EMERGING TECHNOLOGIES, SAN FRANCISCO, NOV. 7 - 9, 1995, 7 Novembre 1995, INSTITUTE OF ELECTRICAL AND ELECTRONICS ENGINEERS, pages 614-617, XP000586627 ULLAH Z ET AL: "FAST INTELLIGENT BATTERY CHARGING: NEURAL-FUZZY APPROACH"
- CONFERENCE PROCEEDINGS OF HIGH FREQUENCY POWER CONVERSION 1994, SAN JOSE, CA, USA 17-21 APRIL, 1994, VENTURA, CA, USA, INTERTEC INT, pages 242-255, XP000605610 D MCARTY: "USING A FUZZY LOGIC CONTROLLER FOR INTELLIGENT BATTERY CHARGING"
- INTERNATIONAL JOURNAL OF ELECTRONICS, vol. 75, no. 1, 1 Juillet 1993, pages 75-86, XP000380712 LIANG Y C ET AL: "DESIGN OF BATTERY CHARGING SYSTEM WITH FUZZY LOGIC CONTROLLER"
- PATENT ABSTRACTS OF JAPAN vol. 018, no. 635 (E-1638) 05 Décembre 1994 & JP-A-06 245 403 (JAPAN STORAGE BATTERY CO LTD;OTHERS: 01) 02 Septembre 1994

## Description

La présente invention a pour objet un dispositif de commande de la charge d'au moins une batterie. Elle est plus particulièrement destinée à contrôler la charge de plusieurs batteries électriques assemblées, éventuellement de types différents, et principalement utilisées comme réservoir de puissance d'énergie. Un des domaines de l'invention peut être la charge d'un lot de batteries embarquées sur un véhicule à traction électrique. Néanmoins l'invention est applicable à toutes sortes de batteries, même petites, utilisable par exemple pour des rasoirs, des ordinateurs personnels, des lampes de poche, etc...

On connaît par ailleurs des dispositifs de charge de batteries, notamment de charge rapide, qui permettent de surveiller les conditions de charge de batterie, en cours du chargement, afin d'arrêter la charge avant que la batterie ne soit détériorée. La détérioration la plus fréquemment rencontrée est une détérioration par élévation brutale de température. Au moment où la batterie est au maximum de sa charge, le phénomène d'électrolyse s'inverse et peut amener la destruction irrémédiable de la batterie. Il importe donc de faire cesser cette charge avant d'arriver à ce stade. Les principes mis en oeuvre dans les dispositifs électroniques effectuant la surveillance de la charge impliquent la connaissance de valeurs caractéristiques liées à la batterie chargée. Par exemple, la surveillance de la température d'une batterie conduira à retenir une température critique qui sera notamment fonction de la nature des parois de la batterie: du fait que la température testée peut être mesurée plus ou moins directement. Avec les dispositifs de l'état de la technique, il faut se livrer à une modélisation de chacun des types de batteries à charger et appliquer des signaux de commande de charge de la batterie dépendant d'un modèle reconnu pour cette batterie.

Par ailleurs certaines batteries peuvent présenter des défauts comme ceux essentiels d'être en court-circuit ou de ne pas tenir la charge. Les dispositifs connus ne sont pas aptes à détecter ces situations et à en empêcher les conséquences: c'est à dire un chargement impossible ou inutile.

L'invention vise à remédier à ces inconvénients en proposant un dispositif de commande dont le principe est complètement différent. Le dispositif de commande de l'invention repose sur l'utilisation de la logique floue.

On connaît déjà un dispositif de commande de la charge d'une batterie utilisant de la logique floue. Un tel dispositif est décrit dans l'article CONFERENCE PROCEEDINGS OF HIGH FREQUENCY POWER CONVERSION 1994, pages 242 - 255, D. Mc CARTY, "Using a Fuzzy Logic Controller For Intelligent Battery Charging", conforme aux préambules des revendications 1 et 2.

Dans l'invention on provoque la mesure, avec des ponts diviseurs de tensions (on pourrait néanmoins mesurer des courants), de différentes conditions de charge de la batterie. Dans un exemple préféré, on en mesure quatre. Pour toutes les conditions mesurées, on établit des jeux de fonctions d'appartenance: chaque fonction déterminant une plage de variation de la variable de mesure. Pour cette plage on considère que cette variable a une qualification particulière. Le fait d'avoir une qualification est par ailleurs quantifié dans la fonction d'appartenance par un coefficient d'appartenance. La variable a la qualification concernée avec un coefficient compris entre zéro et un: zéro quand elle ne l'a pas du tout, un quand elle l'a complètement.

On constitue ensuite un jeu de règles qui établissent des correspondances entre ces qualifications et des signaux à appliquer sur les circuits de commande.

La particularité de l'invention revient alors à traiter de la même façon les conditions de charge (le fait qu'il faut charger plus ou moins selon que la charge de la batterie à charger est moins proche ou plus proche de sa valeur maximale) que l'administration de la charge (par exemple décision d'arrêter la charge d'une batterie qui ne tient pas la charge). De préférence, le dispositif de l'invention effectuera donc en même temps le contrôle technique et le contrôle administratif de la charge.

L'invention a donc pour objet un dispositif de commande de la charge d'au moins une batterie qui se distingue des dispositifs connus par les caractéristiques de la partie caractérisante de la revendication 1 ou celles de la partie caractérisante de la revendication 2.

L'ensemble des fonctions et des règles constitue la description comportementale de la batterie en fonction de ces signaux. Les signaux de commande correspondent à chaque phase d'évolution de la charge en fonction du type de la batterie. On dira que le microprocesseur est un microprocesseur flou si le programme de composition des règles est mis en oeuvre par un circuit câblé. Dans ce cas ce circuit câblé fait une barycentration des résultats de l'application des règles. D'une manière générale le processeur peut mettre en oeuvre un programme de composition qu'il trouve dans une mémoire.

L'invention sera mieux comprise à la lecture de la description qui suit et à l'examen des figures qui l'accompagnent. Celles-ci ne sont données qu'à titre indicatif et nullement limitatif de l'invention. Les figures montrent:
- Figure 1: une représentation détaillée d'un dispositif de commande selon l'invention;
- Figures 2a à 2d: une représentation schématique de fonctions, ou de qualifications, d'appartenance des variables mesurées dans le dispositif de l'invention;
- Figure 3: une représentation de type connu de l'évolution temporelle de la tension de charge d'une batterie;
- Figure 4: un perfectionnement du dispositif de l'invention pour effectuer une moyenne de signaux mesurés;
- Figure 5: un mode préféré de chargement des batteries avec le dispositif de l'invention.

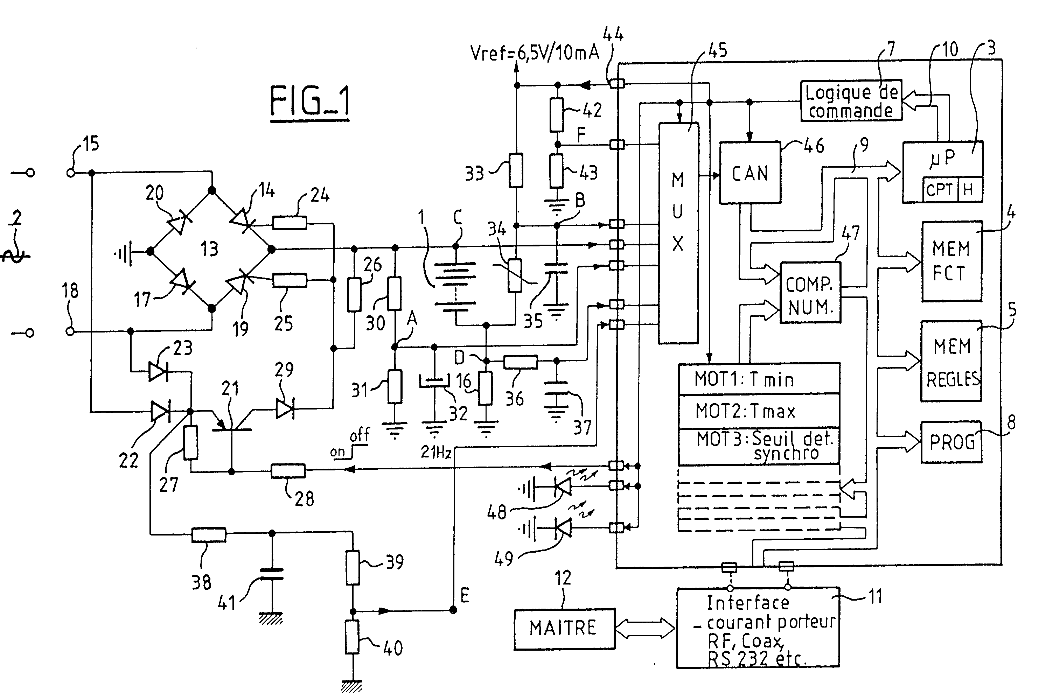

La figure 1 montre un dispositif de commande de la charge d'au moins une batterie 1. La ou les batteries 1 sont chargées à partir d'une alimentation électrique fournie par un secteur électrique alternatif 2, ici monophasé, dont la tension est adaptée à la tension nominale de charge de la batterie 1. Par exemple pour une batterie 1 de 12 Volts la tension alternative du secteur 2 est de 24 Volts efficaces. Le dispositif de l'invention comporte un microprocesseur 3, une mémoire, 4,5,6 et 8 et un jeu de ponts diviseurs. La mémoire peut être subdivisée en différentes parties 4, 5, 6 et 8 de types éventuellement différents. Ou bien toutes les parties correspondent à des zones différentes d'une même mémoire physique. Les ponts diviseurs dont le détail sera indiqué plus loin permettent d'accéder à un certain nombre de noeuds, ici A B C D E F montrant entres autres les conditions de charge de la batterie. Le dispositif de l'invention comporte aussi un circuit logique de commande 7, et des circuits électroniques associés pour commander effectivement la charge de la batterie.

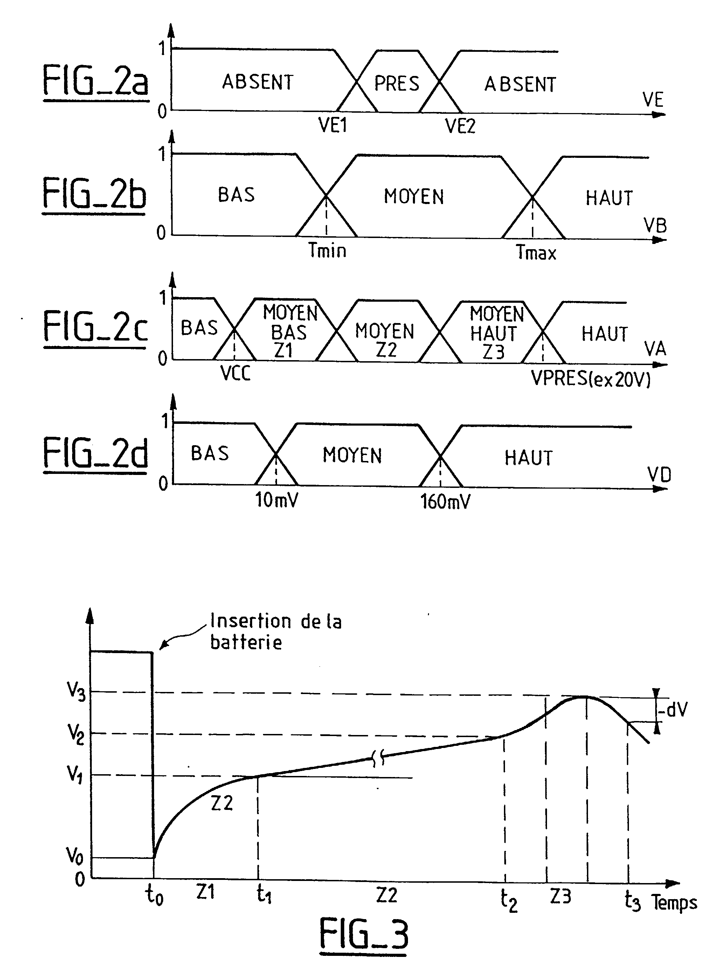

Une caractéristique essentielle de l'invention se situe dans le fait que la mémoire comporte une mémoire de fonctions d'appartenance 4. Ces fonctions sont attachées aux signaux mesurés au point A à D ou à d'autres points. D'une manière connue dans une fonction d'appartenance, par exemple figure 2b, on attribuera à une variable mesurée, ici VB, une qualification, par exemple MOYEN, selon que la valeur de la variable VB est comprise dans une plage correspondante. La qualification MOYEN est une qualification quantifiée par un coefficient d'appartenance compris entre zéro et un. Cette quantification est attribuée selon qu'on considèrera que la valeur de la variable n'appartient pas du tout, ou complètement, à la plage qualifiée. La mémorisation des fonctions d'appartenance s'effectue donc sous forme de table: la table MOYEN de la fonction d'appartenance de la variable VB comporte en adresse des valeurs possibles de la variable VB et en données, enregistrées à ces adresses dans la table, les valeurs de coefficients d'appartenance correspondants. Pour la variable VB la figure 2b montre trois fonctions d'appartenance intitulées BAS, MOYEN et HAUT.

L'autre caractéristique essentielle de l'invention est que le dispositif de commande comporte une autre mémoire 5 (ou une autre zone dans une même mémoire) dans laquelle sont enregistrées des règles. Ces règles permettent d'établir des correspondances entre les qualifications quantifiées d'appartenance et des signaux de commande à appliquer sur des circuits de commande. Ces règles sont de type "Si - fonction d'appartenance - alors - signal de commande". la mémoire 8 contient un programme de mise en oeuvre de la logique floue organisant successivement l'élaboration des coefficients d'appartenance, le test des règles et la composition du résultat des règles pour en déduire le résultat final.

Tous ces organes 3-8 sont reliés entre eux par un bus 9 d'adresses et de données. Un bus 10 de commande du microprocesseur 3 relie ce microprocesseur 3 au circuit logique de commande 7. Lorsqu'on a affaire à plusieurs chargeurs de batteries organisés pour charger un ensemble de batteries, on peut munir le dispositif de l'invention d'une interface 11 de connexion avec un circuit maître 12. L'interface 11 peut être une interface du type à courant porteur (dont les signaux sont alors véhiculés par le secteur 2), ou une interface de type radiofréquence, coaxiale, RS232 série, etc...

Pour expliquer l'architecture des fonctions d'appartenance et le choix et la composition des règles, on va maintenant entrer dans le détail du circuit de la figure 1. Cependant, autant les points A B C D E F choisis pour mener à bien la gestion et l'administration de la charge représentent des noeuds préférés de prélèvement de signaux, autant on pourra choisir d'autres noeuds, éventuellement en nombre plus élevé ou moins élevé. La prise d'informations supplémentaires permettant une administration plus confortable. La complexité du programme de gestion en logique floue ne sera pas affectée par ce nombre, même s'il est élevé. En pratique avec une quinzaine de tables représentant des fonctions d'appartenance, et une dizaine de règles, on arrive à gérer un fonctionnement complexe (à peu de frais). L'ajout d'un jeu de trois ou cinq fonctions d'appartenance supplémentaires et de quelques règles supplémentaires n'augmentera pas la complexité et n'occupera que très peu de place supplémentaire en mémoire.

Le circuit de commande de la charge de la batterie 1 comporte un circuit redresseur double alternance 13 comportant, sur un premier chemin de conduction, un thyristor 14 relié par son anode à un pôle 15 de l'alimentation et par sa cathode au noeud C correspondant au pôle positif de la batterie 1. En variante le thyristor 14 peut être remplacé par un circuit MOS de puissance. Le pôle négatif de la batterie 1 est relié à la masse pas une résistance de pieds 16. Dans un exemple la valeur de cette résistance de pieds est très faible: elle vaut par exemple 0,2 Ohms de manière à ne provoquer au moment de la charge nominale (de l'ordre de 800 mA) qu'une chute de tension minime (de l'ordre de 160 mVolts). Ce premier chemin de conduction se referme par une diode 17 dont l'anode est reliée à la masse et dont la cathode est reliée au deuxième pôle 18 de l'alimentation alternative. Un deuxième chemin comporte dans les mêmes conditions un deuxième thyristor 19 (ou un MOS de puissance) et une deuxième diode 20. Le premier chemin redresse une alternance dite positive, le second une alternance dite négative. Les thyristors 14 et 19 jouent le même rôle que des diodes d'un pont redresseur à diode. Cependant en étant commandé par leur gâchette respective ils permettent par une modulation de phase de la conduction de moduler l'efficacité de celle-ci.

Le circuit de commande proprement dit comporte un transistor 21 de type PNP dont l'émetteur est relié par une diode 22 au pôle 15 et par une diode 23 au pôle 18. Les diodes 22, 23 ont leur cathode reliée à l'émetteur du transistor 21. Le collecteur de ce transistor 21 est relié aux gâchettes des thyristors 14 à 19 par des résistances de couplage respectivement 24, 25 (dont la valeur dans un exemple vaut 560 Ohms). Le collecteur du transistor 21 est par ailleurs polarisé par une résistance de polarisation 26 (dans un exemple cette résistance vaut 10 kOhms). La base du transistor 21 polarisée par une résistance 27 à partir de l'émetteur reçoit une signal de commande appliqué au travers d'une résistance série 28 (dans un exemple les résistances 27 et 28 font toutes les deux 1 kOhms).

Avant que le signal de commande de charge soit appliqué sur la base du transistor 21 le noeud C a une tension nulle (si la batterie est complètement déchargée) ou une tension basse (12 Volts), par rapport à la crête de tension (34 Volts) disponible sur le noeud 15 ou le noeud 19. Le transistor 21 est donc alimenté entre ces deux noeuds. Lorsqu'il reçoit une impulsion de commande sur sa base il se met à conduire portant le collecteur à une tension proche de celle de l'émetteur (proche de 24 Volts dans un exemple). Cette tension est alors appliquée par les résistances 24, 25 sur les gâchettes des thyristors 14 et 19 qui se mettent à conduire. En fait seul le thyristor 14 ou 19 qui reçoit l'alternance positive sur son anode se met à conduire, l'autre reste bloqué: il est en inverse. L'impulsion de commande peut être longue ou courte. Une fois que les thyristors 14 ou 19 sont déclenchés ils continuent à conduire jusqu'à ce que l'alternance s'inverse. Dans le cas où on a des transistors MOS de puissance, on fait durer l'impulsion de commande jusqu'à cette inversion d'alternance.

Pour compléter le circuit, le collecteur du transistor 21 est relié aux résistances 24, 25, 26 par l'intermédiaire d'une diode 19.

Dans ces conditions, avec un signal redressé bialternance, on arrive à provoquer une charge plus ou moins forte de la batterie 1 selon l'instant, calé en phase, auquel on applique l'ordre par rapport au passage par zéro de l'alternance.

Les ponts diviseurs qui permettent de délivrer les signaux aux noeuds A à F sont constitués de la façon suivante. Entre le noeud C et la masse on a connecté deux résistances en série 30 et 31 (dans un exemple leurs valeurs valent respectivement 10 kOhms et 16 kOhms) dont le point milieu A est connecté comme entrée de mesure du microprocesseur 3. De manière à disposer d'une valeur de signal au noeud A qui ne subisse pas des influences successives des alternances redressées on connecte un condensateur 32 (dans un exemple de 4,7 microfarad) entre le noeud A et la masse. Le condensateur 32 forme avec les résistances 30 et 31 un filtre passe-bas dont la fréquence de coupure, dans un exemple, est de l'ordre de 21 Hertz, inférieure dans un rapport 5 à la fréquence du signal disponible au noeud C (quand le secteur 2 est un secteur à 50 Hz).

Le signal au noeud B est prélevé au point milieu d'un pont diviseur comportant une résistance 33 (dans un exemple de 12 kOhms) en série avec une résistance 34 à coefficient de température négatif, ou positif, qui sert à mesurer la température de la batterie. Dans ce but on s'arrange pour que la résistance 34 soit au contact direct de la batterie, éventuellement elle peut même plonger dans le liquide de celle-ci si ses fils de liaisons électriques sont isolés. Ayant un coefficient de température négatif, la valeur de la résistance 34 baisse lorsque la température de la batterie s'élève: le potentiel au noeud B entre ces deux résistances 33 et 34 baisse en correspondance. Le noeud B est par ailleurs relié à la masse par un condensateur 35 permettant également de faire disparaître des composantes hautes fréquences. Alors que le potentiel au noeud A reflète la présence de la batterie, que le potentiel au noeud B reflète son bon état de fonctionnement, que le potentiel au noeud C est représentatif du courant de charge de la batterie, le potentiel au noeud D sera représentatif de l'état de court-circuit de cette batterie. Avant d'être connecté au microprocesseur 3, le signal D subit également un filtrage passe-bas par une résistance 36 et un condensateur 37 (dans un exemple il valent respectivement 10kOhms et un microfarad).

Pour compléter cette panoplie de signaux utiles on prélève en plus dans l'alimentation un signal E permettant de faire la synchronisation du secteur. Le signal E est dans un exemple prélevé sur l'émetteur du transistor 21 par un pont diviseur de résistance comportant les résistances 38 à 40 (de valeur respectivement 100 kOhms, 10 kOhms, 22 kOhms) en série jusqu'à la masse. Le point milieu des résistances 38 et 39 est relié également à la masse par un condensateur 41 (de 1 microfarad) permettant de constituer un filtre passe-bas. Ce filtre laisse passer le signal secteur (sa fréquence de coupure est de l'ordre de 800 Hertz), mais évite de transmettre à titre de synchronisation des parasites provenant du microprocesseur 3 qui fonctionne à haute fréquence. Le signal E détecte le passage par zéro entre deux alternances. Le point milieu des résistances 39 et 40 sert de point de mesure de synchronisation secteur.

On produit par ailleurs une référence de température haute à l'aide de deux résistances 42, 43 branchées entre une sortie 44 de tension de référence du microprocesseur 3 et la masse. Le point milieu F des résistances 42, 43 est tel qu'il délivre une tension que l'on comparera à la tension délivrée par le noeud B.

Les signaux A à F sont introduits sur les entrées d'un multiplexeur 45 commandées par le circuit logique 7. Le multiplexeur 45 en provoque, tour à tour, la conversion analogique numérique dans un convertisseur 46 en vue de leur traitement par le microprocesseur 3. La vitesse de travail du convertisseur analogique numérique 46 est telle qu'il peut effectuer mille mesures des signaux A à F par seconde soit au moins 10 de chacun pendant chacune des alternances du signal secteur redressé bialternance.

La surveillance de la température peut néanmoins être effectuée par des moyens classiques comportant un comparateur numérique 47 recevant les signaux F et B ainsi que par ailleurs des mots de contrôle. Des mots MOT 1 et MOT 2 enregistrés dans la mémoire 6 et représentatifs des températures minimales et maximales autorisées pour la batterie 1. Le comparateur 47 compare la température mesurée aux températures limites et par l'intermédiaire du microprocesseur 3 provoque l'arrêt ou la continuation de la charge.

Le microprocesseur 3 commande enfin par l'intermédiaire de son circuit logique 7 l'allumage de diodes électroluminescentes 48, 49 de couleurs différentes, par exemple verte et rouge respectivement et représentatives du chargement ou de l'arrêt du chargement de la batterie.

Le microprocesseur 3 effectue surtout le traitement de logique floue pour la mise en oeuvre de la commande. Cependant, lorsque la commande est décidée, dans l'invention, on provoque une modulation de la durée de conduction des chemins du redresseur 13 de la façon suivante. On utilise un registre dont le nombre de bits, s'ils étaient tous portés à 1 représenterait une valeur limite admise pour la tension de la batterie. Par ailleurs on mesure la tension effective de la batterie. On fait ensuite la soustraction de cette valeur limite moins la valeur effective. On obtient un signal numérique proportionnellement représentatif de la portion de durée d'une alternance pendant laquelle il faut charger la batterie. Dans un exemple où le registre de stockage a 5 bits, 1 1 1 1 1, et où une valeur mesurée est par exemple 1 0 0 0 1, la soustraction devient 0 1 1 1 0, ce qui revient à inverser la valeur mesurée. Autrement dit la soustraction est facilement accessible.

D'une autre façon, avec une horloge et un compteur on va alors s'arranger pour compter, pendant chaque alternance du signal de charge un nombre de coups d'horloge égal à la valeur numérique mesurée de la tension. Dès que ce compte est atteint on déclenche le chargement. Plus cette tension est faible, plus cette valeur numérique est faible, et plus le chargement se provoquera tôt dans l'alternance. En pratique, il suffit à chaque début d'alternance (mesurée par le signal E) de précharger le compteur avec le résultat numérique obtenu préalablement et stocké dans un registre, et de décompter le temps en fonction des coups d'horloge jusqu'à ce que le compteur soit à zéro. Au moment où il est à zéro on provoque la charge du circuit de la batterie. Celle-ci s'arrête naturellement au renversement de l'alternance. Puis on recommencera pour l'alternance suivante.

Les figures 2a à 2d montrent des fonctions d'appartenances utilisables dans l'invention.

La figure 2a montre la détection du signal de synchronisation VE. Ce signal est dit présent lorsque sa valeur est comprise entre VE1 et VE2. En dehors de ces valeurs il est dit absent. Le coefficient d'appartenance, côté entre zéro et 1 indique à quel degré de certitude ce signal est présent ou absent selon sa valeur.

La figure 2b montre le signal de température de la batterie, ce signal peut être BAS, MOYEN ou HAUT avec des coefficient d'appartenance compris entre zéro et 1 dans les mêmes conditions.

La figure 2c montre la tension disponible sur la batterie cette tension peut comporter trois fonctions principales d'appartenance, la fonction BAS, la fonction MOYEN et la fonction HAUT. La fonction BAS signifie que la tension aux bornes de la batterie étant faible celle-ci peut être considérée en court-circuit. La fonction BAS existe si la tension est inférieure à une tension de court-circuit VCC. Par contre si la batterie est absente, la tension au point A sera haute. Ceci se produit si la tension au point A est supérieure à une tension BPRES correspondant à la présence de la batterie. Cette tension de présence est de l'ordre de 20 Volts dans l'exemple étudié.

Les fonctions d'appartenance MOYEN seront elles-mêmes réparties en 3 fonctions principales: la fonctions MOYEN BAS, la fonction MOYEN tout court et la fonction MOYEN HAUT. Ces fonction d'appartenance correspondent à des zones de charge de la batterie représentée par ailleurs sur la figure 3 où, en abscisse, figure le temps et en ordonnée figure la tension de la batterie alors qu'elle est en cours de charge à courant constant. Pendant une première phase Z1, du temps t₀ au temps t₁ après l'insertion de la batterie, la tension de celle-ci croît relativement rapidement de V₀ à V₁. Pendant la deuxième phase, Z2, de t₁ à t₂, la tension croît plus lentement de V₁ à V₂. Au temps t₂ se produit une accélération de l'augmentation de la tension pendant la période Z3 de t₂ à environ t₃. Pendant cette période la tension croît de V₂ à V₃. La forme de cette courbe est connue. Les trois fonctions d'appartenance MOYEN de la figure 2c, relatives aux zones Z1, Z2, Z3 de charge s'imbriquent les unes dans les autres. Ceci signifie, par exemple, que la tension V₂ (mesurée par exemple au temps t₂) peut être considérée comme une tension de type MOYEN avec un coefficient 0,5, et de type MOYEN HAUT avec un coefficient 0,5 également.

La figure 2d montre avec trois fonctions d'appartenance une corroboration de ce que la batterie peut être défectueuse (ne tient pas la charge) ou même en court-circuit. Si la tension au point VD appartient à la fonction d'appartenance BAS (inférieure dans un exemple à 10 mVolts) on en déduira qu'elle est défectueuse. Au delà de 160 mVolts on considèrera qu'il y a un court-circuit.

Les règles les plus communément utilisées sont écrites ci-dessous:
Si VB est BAS alors OUT vaut 0 (pas de charge)
Si VB est HAUT alors OUT vaut 0
Si VB est MOYEN alors OUT vaut 1
Si VA est BAS et si VB est HAUT alors OUT vaut 0
Si VA est HAUT alors OUT vaut 0
Si VD est HAUT et si VA est MOYEN alors OUT vaut 0
Si VA est MOYEN et si VD est MOYEN alors OUT vaut 1
Si VA est BAS et si VD est BAS alors OUT vaut 0
Si VA (t₁) est supérieur à VA (t₀) + X et
si VA (t₂) est supérieur à VA (t₁) + X et
si VA (t₃) est supérieur à VA (t₂) + X alors il y a changement de pente.

Les trois premières règles concernent la mesure de la température, le signal OUT correspondant à l'ordre qu'il faut appliquer au circuit de charge. Les trois règles suivantes concernent le fait que la batterie puisse être en court-circuit.

Alors que les huit premières règles visent des signaux disponibles simultanément (au multiplexage par le multiplexeur 45 près), les trois règles suivantes visent à constituer un historique qui permet en définitive, avec la logique floue de régler un problème de mesure de la dérivée. Dans ce cas les valeurs successives tO - t3 de la variable A sont stockées à des adresses a₀, a₁, a₂, a₃ successives d'une mémoire. De préférence la mémoire est tournante. Les adresses a1-a3 sont modifiées par décalage à chaque nouvelle mesure. Dans ce but le multiplexeur 48 comporte un séquenceur qui effectue ces rotations d'adresse d'une mesure de A à l'autre. Elles sont ensuite comparées chacune à une précédente augmentée d'une quantité X prédéterminée. Dans un exemple X vaut 13 mVolts. Si donc on mesure que la croissance de la tension VA au cours du temps est supérieure à un seuil, le seuil X, d'une mesure à une mesure suivante on décidera alors qu'il y a changement de zone. Dans ce cas la mesure de la valeur VA elle-même ne sera plus entreprise dans les mêmes conditions que précédemment. Ceci vaut essentiellement pour le passage de la zone Z1 à la zone Z2.

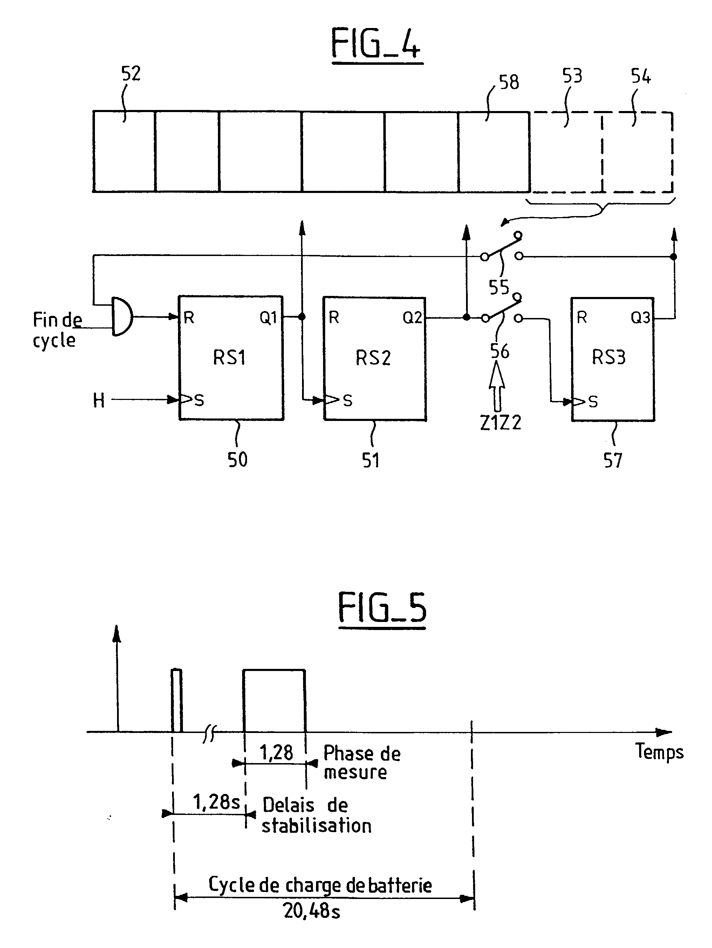

A cet effet la figure 4 montre un perfectionnement du dispositif de l'invention. Pour tenir compte des fluctuations de mesure il est nécessaire d'effectuer une moyenne sur plusieurs mesures successives. Dans l'état de la technique ceci est effectuée en stockant dans des registres, par exemple quatre registres pour quatre mesures successives, les résultats de mesure et en faisant effectuer la moyenne de ces mesures par un opérateur arithmétique contenu dans le microprocesseur 3. Cependant ce type d'opérations n'est pas facilement réalisable avec un microprocesseur 3 à bas coût. En effet, ce type d'opérations nécessite la réalisation d'au moins une cinquantaine de portes logiques. Ceci occupe de la place, le microprocesseur 3 doit être gros: il est cher.

Dans l'invention pour résoudre ce problème on constate que si on veut faire une moyenne par quatre il suffit de mettre en cascade 2 bascules RS 50 et 51. En définitive on réalise ainsi un compteur modulo quatre dit compteur par quatre. Si ces quatre mesures successives ont, en moyenne, la même valeur que quatre mesures précédentes, ce compteur par quatre se retrouvera, à l'issue, dans le même état que ce qu'il avait au départ. Par contre si au cours de la mesure la valeur moyenne augmente, le résultat du compteur par quatre, à l'issue, sera différent.

Le comptage est entrepris simplement en remarquant que le convertisseur analogique numérique 46 comporte un échantillonneur en cascade avec un circuit de comptage qui compte des impulsions de charge nécessaire pour égaliser les tensions sur deux connections qui reçoivent d'une part le signal échantillonné et d'autre part les charges comptées. Lorsqu'il y a égalité on arrête le comptage des impulsions. L'état du compteur d'impulsions représente donc la quantification numérique du signal analogique échantillonné. Normalement celui-ci est stocké dans un registre 52.

Dans l'invention on se sert de ces impulsions comptées pour incrémenter le compteur par quatre constitué des bascules 50 et 51. Le signal d'horloge de comptage étant appliqué sur l'entrée S de ces bascules. Celles-ci sont reliées en cascade, la sortie Q1 de la bascule 50 étant reliée à l'entrée S de la bascule 51. L'état final de ce compteur par quatre renseigne sur les bits de poids faibles du comptage.

En définitive plutôt que d'avoir quatre registres, plus un registre de stockage du résultat, on n'a ici plus qu'un seul registre 52 qui reçoit le signal délivré par le convertisseur 46 dans le registre 52, les deux bits de poids faible 53 et 54 sont en fait remplacés par les signaux disponibles en sortie des bascules 51 et 50 respectivement.

Au moment du changement de zone Z1 à Z2 plutôt que de faire un moyennage par quatre on va faire un moyennage par huit. Dans ce but avec le signal de détection de changement de zone Z1, Z2 on ferme deux interrupteurs 55, 56 qui mettent en cascade une troisième bascule 57 avec les bascules 50 et 51. Dans ce cas on remplacera dans le registre 52 un autre bit de poids faible 58 par le contenu du registre 57. La détection du changement de zone s'effectue par utilisation d'une règle qui indique que si le signal VA est MOYEN BAS avec un coefficient différent de zéro, et s'il est également MOYEN dans de mêmes conditions, alors il faut changer de zone et provoquer la commutation. Ce moyennage par huit sert pour détecter le futur passage de Z2 à Z3 en mesurant une grandeur assimilable à une dérivée seconde. En effet, le compteur par huit (modulo huit) permet, en accumulant les variations de déterminer quand la tension V2 est atteinte. Comme il bascule plus tardivement que le compteur par quatre il mesure le changement de pente.

La mémoire programme 8 est une mémoire qui permet la composition des règles évoquées ci-dessus. On retiendra que pour le calcul des ordres, notamment des signaux de commande de charge, on pourra retenir une composition de type connu dite par produit ou une composition dite du minimum. Une composition par produit revient à multiplier entre eux les ordres pondérés par les coefficients d'appartenance, la charge n'étant autorisée que quand l'ordre vaut plus que zéro. La composition par le minimum revient en définitive à prendre en considération les coefficient d'appartenance les plus faibles et à obtenir un ordre pondéré ou non selon le résultat. Dans le cas où on provoque une charge pondérée par la valeur de l'ordre, la pondération sera une pondération de durée. Un ordre de chargement de valeur 0,5 conduit par exemple à une durée de chargement moitié moindre que la durée retenue normalement.

Comme évoqué précédemment avec le contrôle de phase pour le déclenchement des thyristors, les chargements de moitié reviennent à rajouter un bit 1 de poids fort à la mesure de VA. Dans ce cas à chaque alternance on attend le double du temps avant de provoquer le chargement. Donc la durée de chargement est réduite.

La figure 5 montre, pour respecter une normalisation en cours, la répartition en cycles de la charge de la batterie. Un cycle dont la durée normalisée est de 20,48 secondes comporte trois phases: une première phase de 1,28 seconde permettant une stabilisation de tension électrique dans la batterie et dans le circuit de charge et de mesure. Une deuxième phase dont la durée est également de 1,28 seconde est une phase de mesure. C'est la durée pendant laquelle on mesure les tensions aux points A B C D et F. Puis la troisième phase est une durée de chargement proprement dite. C'est la durée qui reste dans le cycle après l'écoulement des deux phases. Pendant la durée de chargement proprement dite on module la durée de conduction à chaque alternance en fonction du besoin de chargement.

La prise en compte administrative et technique du fait qu'une batterie ne tient pas la charge est alors mesurée simplement en comparant, sur plusieurs cycles, les durées effectives pendant lesquelles on a autorisé le chargement (qui correspondent à l'accumulation des durées pendant lesquelles au cours de chaque alternance les thyristors sont passants). On compare les durées à l'évolution de la tension VA ou autre. Si cette comparaison est défavorable on en déduit que la batterie ne tient pas la charge et on peut alors renoncer à la charger. La comparaison est défavorable si VA n'augmente plus alors que les durées de chargement sont significatives. Dans ce but dans les mémoires notamment la mémoire 6 on mémorisera d'un cycle à l'autre des valeurs de certaines conditions de charge afin de les comparer entre elles et en déduire les décisions à prendre.

Enfin il est possible en cumulant ces durées de chargement d'évaluer la durée totale de chargement et en conséquence le coût de chaque rechargement.

L'interface 11 comporte enfin une mémoire d'échange. Cette mémoire d'échange sert à assurer la communication entre le circuit maître et l'esclave. elle permet de télécharger des valeurs de pentes différentes, suivant le type de batterie. En même temps, elle offre la possibilité de charger ces valeurs en dynamique (au cours d'une utilisation) par un téléchargement dans les registres de la mémoire 6. Elle permet aussi de télécharger des règles locales qui permettent de modifier le comportement du système en réponse à un problème de fonctionnement précis et ou dans une zone précise.

## Revendications

1. Dispositif de commande de la charge d'au moins une batterie (1) comprenant un microprocesseur (3), une mémoire (4,5,6,8), et des circuits (21-28) de commande de la charge de la batterie qui est reliée à ce dispositif, et comportant en mémoire :
- un jeu (14) de fonctions d'appartenance, attachées à des signaux (VA-VF) mesurés, formant des correspondances quantifiées par des coefficients entre des valeurs (VA(t₀)) de ces signaux et des qualifications (BAS, MOYEN, HAUT) désignant ces fonctions, et mémorisées dans la mémoire,
- un ensemble (5) de règles établissant des correspondances entre ces qualifications d'appartenance et des signaux de commande à appliquer sur les circuits de commande, et
- un programme (8) de composition des règles pour produire les signaux de commande, caractérisé en ce qu'il comporte :
- un jeu de ponts diviseurs (30,31) de tensions pour mesurer des conditions de la charge de la batterie, sur chacun desquels un signal mesuré est prélevé,
- une mémoire tournante (6) pour mémoriser plusieurs états successifs d'une même condition de charge de la batterie,
- dans les règles, au moins une règle qui tient compte de ces états successifs pour établir une correspondance avec des signaux de commande à appliquer sur les circuits de commande ou sur des circuits de mesure des conditions de charge.

2. Dispositif de commande de la charge d'au moins une batterie (1) comprenant un microprocesseur (3), une mémoire (4,5,6,8), et des circuits (21-28) de commande de la charge de la batterie qui est reliée à ce dispositif, et comportant en mémoire
- un jeu (14) de fonctions d'appartenance, attachées à des signaux (VA-VF) mesurés, formant des correspondances quantifiées par des coefficients entre des valeurs (VA(t₀)) de ces signaux et des qualifications (BAS, MOYENS, HAUT) désignant ces fonctions, et mémorisées dans la mémoire,
- un ensemble (5) de règles établissant des correspondances entre ces qualifications d'appartenance et des signaux de commande à appliquer sur les circuits de commande, et
- un programme (8) de composition des règles pour produire les signaux de commande, caractérisé en ce qu'il comporte
- un circuit compteur avec n bascules (50,51) en cascade pour recevoir 2ⁿ signaux de mesure successifs et en faire la moyenne et un jeu de ponts diviseurs (30,31) de tensions pour mesurer des conditions de la charge de la batterie sur chaqu'un desquels un signal mesuré est prélevé.

3. Dispositif selon la revendication 1, caractérisé en ce qu'il comporte
- un circuit compteur avec n bascules (50,51) en cascade pour recevoir 2ⁿ signaux de mesure successifs et en faire la moyenne.

4. Dispositif selon la revendication 2 ou la revendication 3, caractérisé en ce qu'il comporte
- un circuit (55,56) pour changer le nombre de bascules du compteur avec n bascules en cascade.

5. Dispositif selon l'une des revendications 1 à 4, caractérisé en ce qu'il comporte
- un convertisseur (46) pour convertir un signal mesuré analogiquement en un signal numérique,
- un circuit pour déduire du signal numérique converti un résultat numérique correspondant à une durée proportionnelle de conduction,
- une horloge et un compteur pour provoquer la charge de la batterie pendant un certain temps repéré, en fonction du résultat numérique, par rapport à un signal de synchronisation.

6. Dispositif selon l'une des revendications 1 à 5, caractérisé en ce qu'il comporte
- un circuit pour détecter le passage par zéro d'un signal (E) d'alimentation du dispositif.

7. Dispositif selon l'une des revendications 1 à 6, caractérisé en ce qu'il comporte
- un circuit avec une résistance (34) à coefficient de température négatif ou positif pour mesure la température de la batterie.

8. Dispositif selon l'une des revendications 1 à 7, caractérisé en ce qu'il comporte
- un pont diviseur (31,31) connecté aux bornes du circuit de charge de la batterie pour mesurer un signal de tension correspondant à la tension de cette batterie.

9. Dispositif selon la revendication 8, caractérisé en ce qu'il comporte
- une résistance (16) de pied de la batterie pour mesurer un signal de tension représentatif, avec celui correspondant à la tension de la batterie, de la présence, de l'absence, ou du bon état de la batterie en cours de chargement.

10. Dispositif selon l'une des revendications 1 à 9, caractérisé en ce qu'il comporte en mémoire
- un programme de gestion de la charge de la batterie avec des cycles de chargement, chaque cycle comportant une phase de stabilisation, une phase de mesure et une phase de charge proprement dite, et
- des zones (6) pour mémoriser, d'un cycle à l'autre des valeurs de certaines conditions de charge afin de les comparer entre eux.

11. Dispositif selon l'une des revendications 1 à 10 caractérisé en ce qu'il comporte
- un circuit interface, notamment par courant porteur, pour être relié à un circuit maître.

12. Ensemble de dispositifs selon l'une des revendications 1 à 10 pour commander la charge de plusieurs batteries, caractérisé en ce que chaque dispositif comporte
- une interface (11) de communication avec un circuit logique maître,
- des circuits pour modifier dans la mémoire de certains de ces dispositifs les jeux des fonctions d'appartenance et ou les règles en fonction de signaux reçus du circuit logique maître.

## Patentansprüche

1. Vorrichtung zur Steuerung der Ladung mindestens einer Batterie (1), die einen Mikroprozessor (3), einen Speicher (4, 5, 6, 8) und Schaltungen (21-28) zur Steuerung der Ladung der Batterie umfaßt, die an diese Vorrichtung angeschlossen ist, und gespeichert umfaßt:
- eine Gruppe (14) von Zugehörigkeitsfunktionen, die mit gemessenen Signalen (VA-VF) verknüpft sind, welche Zuordnungen bilden, die von Koeffizienten zwischen Werten (VA(tₒ)) dieser Signale und Kennzeichnungen (NIEDRIG, MITTEL, HOCH), die diese Funktionen bezeichnen, quantifiziert werden, und die in dem Speicher gespeichert werden,
- einen Komplex (5) von Regeln, die Zuordnungen zwischen diesen Zugehörigkeitskennzeichnungen und Steuersignalen herstellen, die an die Steuerschaltungen anzulegen sind, und
- ein Programm (8) der Zusammensetzung der Regeln zur Herstellung von Steuersignalen, dadurch gekennzeichnet, daß es umfaßt:
- einen Satz Spannungsteilerbrücken (30, 31) zum Messen von Ladebedingungen der Batterie, an denen jeweils ein gemessenes Signal abgenommen wird,
- einen Drehspeicher (6) zum Speichern mehrerer aufeinanderfolgender Zustände ein und derselben Ladebedingung der Batterie,
- von den Regeln mindestens eine Regel, die diese aufeinanderfolgenden Zustände berücksichtigt, um eine Zuordnung zu Steuersignalen herzustellen, die an die Steuerschaltungen oder an Schaltungen zum Messen der Ladebedingungen angelegt werden sollen.

2. Vorrichtung zur Steuerung der Ladung mindestens einer Batterie (1), die einen Mikroprozessor (3), einen Speicher (4, 5, 6, 8) und Schaltungen (21-28) zur Steuerung der Ladung der Batterie umfaßt, die an diese Vorrichtung angeschlossen ist, und gespeichert umfaßt:
- eine Gruppe (14) von Zugehörigkeitsfunktionen, die mit gemessenen Signalen (VA-VF) verknüpft sind, welche Zuordnungen bilden, die von Koeffizienten zwischen Werten (VA(tₒ)) dieser Signale und Kennzeichnungen (NIEDRIG, MITTEL, HOCH), die diese Funktionen bezeichnen, quantifiziert werden, und die in dem Speicher gespeichert sind,
- einen Komplex (5) von Regeln, die Zuordnungen zwischen diesen Zugehörigkeitskennzeichnungen und Steuersignalen herstellen, die an die Steuerschaltungen anzulegen sind, und
- ein Programm (8) der Zusammensetzung der Regeln zur Herstellung von Steuersignalen, dadurch gekennzeichnet, daß es umfaßt:
- eine Zählschaltung mit n in Kaskade geschalteten Triggern (50, 51) zum Empfang von 2ⁿ aufeinanderfolgenden Meßsignalen und zur Ermittlung des Durchschnitts dieser Signale, und einen Satz Spannungsteilerbrücken (30, 31) zum Messen von Ladebedingungen der Batterie, wobei an jeder dieser Brücken ein gemessenes Signal abgenommen wird.

3. Vorrichtung nach Anspruch 1, dadurch gekennzeichnet, daß sie umfaßt:
- eine Zählschaltung mit n in Kaskade geschalteten Triggern (50, 51) zum Empfang von 2ⁿ aufeinanderfolgenden Meßsignalen und zur Ermittlung des Durchschnitts dieser Signale.

4. Vorrichtung nach Anspruch 2 oder 3, dadurch gekennzeichnet, daß sie umfaßt:
- eine Schaltung (55, 56) zum Ändern der Anzahl von Triggern des Zählers mit n in Kaskade geschalteten Triggern.

5. Vorrichtung nach einem der Ansprüche 1 bis 4, dadurch gekennzeichnet, daß sie umfaßt:
- einen Umsetzer (46) zum Umsetzen eines analog gemessenen Signals in ein digitales Signal,
- eine Schaltung, mit der von dem umgesetzten digitalen Signal ein digitales Resultat abgeleitet werden soll, das einer proportionalen Leitungsdauer entspricht,
- einen Zeitgeber und einen Zähler, um die Ladung der Batterie während einer bestimmten ermittelten Zeit entsprechend dem digitalen Resultat, bezogen auf ein Synchronisationssignal, zu bewirken.

6. Vorrichtung nach einem der Ansprüche 1 bis 5, dadurch gekennzeichnet, daß sie umfaßt:
- eine Schaltung, die feststellen soll, wenn ein Speisesignal (E) der Vorrichtung durch den Wert Null führt.

7. Vorrichtung nach einem der Ansprüche 1 bis 6, dadurch gekennzeichnet, daß sie umfaßt:
- eine Schaltung mit einem Widerstand (34) mit einem negativen oder positiven Temperaturkoeffizienten zum Messen der Temperatur der Batterie.

8. Vorrichtung nach einem der Ansprüche 1 bis 7, dadurch gekennzeichnet, daß sie umfaßt:
- eine Spannungsteilerbrücke (31, 31), die an die Klemmen der Batterieladeschaltung angeschlossen ist, um ein Spannungssignal zu messen, das der Spannung dieser Batterie entspricht.

9. Vorrichtung nach Anspruch 8, dadurch gekennzeichnet, daß sie umfaßt:
- einen Fußwiderstand (16) der Batterie zum Messen eines repräsentativen Spannungssignals mit dem, das der Spannung der Batterie entspricht, des Vorhandenseins, Nichtvorhandenseins oder des guten Zustands der Batterie während des Ladens.

10. Vorrichtung nach einem der Ansprüche 1 bis 9, dadurch gekennzeichnet, daß sie gespeichert umfaßt:
- ein Programm zur Steuerung der Ladung der Batterie mit Ladungszyklen, wobei jeder Zyklus eine Stabilisierungs-, eine Meß- und eine eigentliche Ladephase umfaßt, und
- Bereiche (6) zum Speichern der Werte bestimmter Ladebedingungen von einem Zyklus zum nächsten, um diese miteinander zu vergleichen.

11. Vorrichtung nach einem der Ansprüche 1 bis 10, dadurch gekennzeichnet, daß sie umfaßt:
- eine Anpassungsschaltung, die insbesondere durch Trägerstrom mit einer Hauptschaltung verbunden werden soll.

12. Alle Vorrichtungen nach einem der Ansprüche 1 bis 10 zur Steuerung der Ladung mehrerer Batterien, dadurch gekennzeichnet, daß jede Vorrichtung umfaßt:
- eine Schnittstelle (11) zur Kommunikation mit einer logischen Hauptschaltung,
- Schaltungen zum Verändern der Gruppe von Zugehörigkeitsfunktionen und/oder der Regeln im Speicher von bestimmten dieser Vorrichtungen in Abhängigkeit von Signalen, die von dem logischen Hauptkreis empfangen wurden.

## Claims

1. Device for controlling the charging of at least one battery (1) comprising a microprocessor (3), a memory (4, 5, 6, 8) and circuits (21-28) for controlling the charging of the battery which is connected to this device, and containing in memory:
- a set (14) of membership functions, attached to measured signals (VA-VF), forming correspondences quantified by coefficients between values (VA(tₒ)) of these signals and qualifications (LOW, MEDIUM, HIGH) designating these functions, and stored in the memory,
- a set (5) of rules establishing correspondences between these membership qualifications and control signals to be applied to the control circuits, and
- a program (8) for the composition of the rules for producing the control signals,
characterised in that it has:
- a set of voltage divider bridges (30, 31) for measuring battery charge conditions, from each of which a measured signal is taken,
- a rotating memory (6) for storing several successive states of one and the same battery charge condition,
- in the rules, at least one rule which takes account of these successive states in order to establish a correspondence with control signals to be applied to the control circuits or to charge condition measuring circuits.

2. Device for controlling the charging of at least one battery (1) comprising a microprocessor (3), a memory (4, 5, 6, 8) and circuits (21-28) for controlling the charging of the battery which is connected to this device, and containing in memory:
- a set (14) of membership functions, attached to measured signals (VA-VF), forming correspondences quantified by coefficients between values (VA(t₀)) of these signals and qualifications (LOW, MEDIUM, HIGH) designating these functions, and stored in the memory,
- a set (5) of rules establishing correspondences between these membership qualifications and control signals to be applied to the control circuits, and
- a program (8) for the composition of the rules for producing the control signals,
- a counting circuit with n flip-flops (50, 51) in cascade before receiving 2ⁿ successive measuring signals and for taking the average thereof, and a set of voltage divider bridges (30, 31) for measuring battery charge conditions from each of which a measured signal is taken.

3. Device according to Claim 1, characterised in that it has
- a counting circuit with n flip-flops (50, 51) in cascade for receiving 2ⁿ successive measuring signals and taking the average thereof.

4. Device according to Claim 2 or Claim 3,
characterised in that it has
- a circuit (55, 56) for changing the number of flip-flops of the counter with n flip-flops in cascade.

5. Device according to one of Claims 1 to 4,
characterised in that it has
- a converter (46) for converting a signal measured in analogue fashion into a digital signal,
- a circuit for deriving, from the converted digital signal, a digital result corresponding to a proportional conduction period,
- a clock and a counter for bringing about the charging of the battery during a certain length of time located, as a function of the digital result, with respect to a synchronisation signal.

6. Device according to one of Claims 1 to 5,
characterised in that it has
- a circuit for detecting the zero crossing of a signal (E) for the supply of the device.

7. Device according to one of Claims 1 to 6,
characterised in that it has
- a circuit with a resister (34) with a negative or positive temperature coefficient for measuring the temperature of the battery.

8. Device according to one of Claims 1 to 7,
characterised in that it has
- a divider bridge (31, 31) connected to the terminals of the battery charging circuit for measuring a voltage signal corresponding to the voltage of this battery.

9. Device according to Claim 8, characterised in that it has
- a battery base resister (16) for measuring a voltage signal representing, with the one corresponding to the battery voltage, the presence, absence or good condition of the battery during charging.

10. Device according to one of Claims 1 to 9,
characterised in that it has in memory
- a program for managing the charging of the battery with charging cycles, each cycle having a stabilisation phase, a measuring phase and a charging phase proper, and
- areas (6) for storing, from one cycle to another, values of certain charge conditions in order to compare between them.

11. Device according to one of Claims 1 to 10,
characterised in that it has
- an interface circuit, notably by carrier current, for being connected to a master circuit.

12. Set of devices according to one of Claims 1 to 10 for controlling the charging of several batteries,
characterised in that each battery has
- an interface (11) for communication with a master logic circuit,
- circuits for modifying in the memory of some of these devices the sets of membership functions and/or the rules according to signals received from the master logic circuit.
